# EUROPÄISCHE PATENTSCHRIFT

(11) **EP 3 298 310 B1**
(45) Veröffentlichungstag und Bekanntmachung des Hinweises auf die Patenterteilung: **29.01.2020**
(21) Anmeldenummer: 16736368.8
(22) Anmeldetag: 11.05.2016
(51) Int. Cl.: F16K 31/10, F16K 31/56, F16K 35/16

(54) **SCHNELLSCHLUSSVENTIL**
QUICK-CLOSURE VALVE
SOUPAPE À FERMETURE RAPIDE

(30) Priorität: 18.05.2015 DE 102015107715; 18.05.2015 DE 202015102524 U
(43) Veröffentlichungstag der Anmeldung: 28.03.2018
(73) Patentinhaber: Lutz-Jesco GmbH, 30900 Wedemark (DE)
(72) Erfinder: HOFF, Detlev, 97896 Freudenberg (DE)
(74) Vertreter: Geitz Truckenmüller Lucht Christ
(86) Internationale Anmeldenummer: PCT/DE2016/100220
(87) Internationale Veröffentlichungsnummer: WO 2016/184454

(56) Entgegenhaltungen:
- EP-A2- 1 895 219
- DE-B1- 2 239 527
- DE-C- 705 631
- JP-A- S57 129 982

## Beschreibung

Die vorliegende Erfindung betrifft ein Schnellschlussventil zur Verriegelung eines Fluidbehälters, umfassend ein Ventilgehäuse mit einem über eine Fluidleitung mit einem Fluidauslass verbundenen Fluideinlass und einer durch eine fluiddichte Buchse in die Fluidleitung längsverschieblich einrückbare Ventilspindel mit einem endständigen Dichtelement zur Abdichtung der Fluidleitung, wobei die Ventilspindel gegen die Federkraft einer Schließfeder in einer Durchlassposition vorspannbar ist, wobei die Schließfeder (13) von einer mittels eines Spannelements betätigten Spannvorrichtung gehalten ist, welches Spannelement an einem freien Ende eine manuelle Druckbetätigung zur Vorspannung der Schließfeder (13) erlaubt und mittels einer elektromagnetisch gesteuerten Verrastung in einer Vorspannposition gehalten und aus dieser freisetzbar ist.

Ein solches Schnellschlussventil ist bereits aus der EP 1 895 219 A1 vorbekannt. Es dient zur Notauslösung für die Abschaltung von Versorgungsleitungen. Weiter sind aus der JP57129982 A, wie auch aus der DE 705 631 C ähnliche, federbelastete und elektromagnetisch betätigte Schnellschlussventile bekannt.

Ein weiteres Schnellschlussventil ist zudem aus der WO 2014/187702 A1 vorbekannt. Hierbei ist in einem gemeinsamen Gehäuse eine Spannspindel angeordnet, welche mithilfe eines Motors betrieben wird, um eine Klinke hinter einer Klinkscheibe einzuklinken. Die Klinke selbst ist mit einem Federteller verbunden, welcher eine Schließfeder betätigt. Nach dem Einklinken bei bis zum Anschlag in das Gehäuse eingerückter Spannspindel wird diese unter Stauchung der Spannfeder wieder ausgerückt, wobei in dieser Position ein Fluid das Ventil passieren kann. Im Fall eines Auslösens des Ventils klinkt die Klinkscheibe aus, was über einen Elektromagneten vollzogen wird. Die Schließfeder entspannt sich hierbei und rückt die Ventilspindel bis zum Anschlag aus, wobei das Ventil geschlossen wird.

Eine derartige Bauform ist jedoch aufgrund der Integration in einem gemeinsamen Gehäuse sehr groß und insoweit auch schwer, was insbesondere beim Einsatz direkt an einem Druckbehälter von Nachteil ist. Derartige Druckbehälter müssen einzeln abgesperrt werden und werden in Reihen nebeneinander aufgestellt, so dass die einzelnen Ventilvorrichtungen möglichst platzsparend angeordnet sein sollen. Idealerweise soll es möglich sein, die Ventilanordnungen direkt im Bereich des bereits vorhandenen Ventils der Druckbehälter zu installieren, ohne dass diese aufgrund des Gewichts der Ventilanordnungen mechanischen Spannungen ausgesetzt werden. Darüber hinaus ist es vorgesehen, beim Stand der Technik ein Spannen des Ventils selbsttätig vorzunehmen, da dies über den genannten Antrieb erfolgt. Eine derartige Lösung soll jedoch aufgrund von Sicherheitsüberlegungen ausgeschlossen werden, um sicherzustellen, dass ein Mitarbeiter nach einem Auslösen des Ventils vor Ort gewesen sein muss, um dies wieder einzurasten und dabei vor Ort prüft, ob die Anlage im Übrigen funktionsbereit ist. Nur wenn dies von einem Mitarbeiter persönlich geprüft worden ist, soll das Ventil wieder zugeschaltet werden können.

Weiter ist aus der DE 1087862 B ein Schnellschlussventil bekannt, bei welchem aufgrund der Gewichtskraft zweier belasteter Hebel im Fall der Auslösung ein Verschluss des Ventils erfolgt. Die Spannung des Schnellschlussventils erfolgt hierbei im Handbetrieb, indem die Hebel bis zu einer Verrastungslage gegen die Schwerkraft bewegt werden. Auch eine solche Lösung kann nicht ohne enormen baulichen Aufwand im Bereich eines Druckbehälters eingesetzt werden, insbesondere nicht an das dort vorhandene Ventil direkt angeschlossen werden.

Der Gegenstand der DE 3508151 A1 sieht eine Betätigung des Schnellschlussventils mithilfe von Permanentmagneten vor, welche im Auslösensfall mechanisch entfernt oder ummagnetisiert werden müssen. In jedem Fall befindet sich auch hier die Spannvorrichtung des Ventils gemeinsam mit der Fluidleitung in einem Gehäuse, was die Bauform ebenfalls deutlich vergrößert. Eine Alternative zu der genannten mechanischen Auslösung des Ventils ist in einer Variante genannt, in der eine vollständig selbsttätige Bewegung des Verschlusselements realisiert wird, sowohl beim Öffnen also auch beim Schließen. Ein manueller Eingriff ist in dieser Variante allerdings ausgeschlossen.

Eine weitere Lösung zeigt die US 7,059,338 B1 auf, welche den Ansatz verfolgt, direkt am Absperrhahn eines herkömmlichen Ventils anzugreifen und anstelle einer Handbetätigung eine maschinelle Betätigung mit Hilfe eines Ratschensystems zu realisieren. Dies ist insbesondere deshalb problematisch, weil es einige Zeit in Anspruch nimmt, das Ventil zu verschließen und es darüber hinaus unklar bleibt, wann genau das Ventil tatsächlich verschlossen ist. Die einzige Rückmeldung hierfür ist der Widerstand, welcher sich an dem Schaft der Ventilspindel zeigt, der jedoch auch durch mechanische Behinderungen verursacht werden kann und kein sicherer Indikator für einen Verschluss des Ventils ist. Aus diesem Grund wird in der Regel bei solchen Lösungen eine zu große Kraftanstrengung aufgebracht, um sicherzustellen, dass ein Verschluss wirklich erfolgt ist. Im Fall einer fehlenden mechanischen Behinderung führt dies jedoch dazu, dass das Ventil zu stark zugedreht wird, was wiederum zu Beschädigungen des Ventils führt.

Hiervon ausgehend soll die vorliegende Erfindung ein Schnellschlussventil vorschlagen, welches die im Stand der Technik vorhandenen Probleme löst, insbesondere in seiner Bauform so kompakt und leicht ist, dass es direkt im Bereich des vorhandenen Ventils eines Druckbehälters angeordnet werden kann, ohne diesen durch sein Gewicht zu stark zu belasten, eine selbsttätige Auslösung des Ventils ermöglicht, aber eine rein manuelle Wiedereinrastung des Spannmechanismus vorsieht, um eine selbsttätige Neuspannung der Spannvorrichtung zu vermeiden. Ferner soll hierbei sichergestellt werden, dass eine Beschädigung des Ventils beim Auslösen nicht erfolgt und die Auslösung schnell und beliebig wiederholbar durchgeführt wird.

Gelöst wird diese Aufgabe durch ein Schnellschlussventil gemäß den Merkmalen des Anspruchs 1. Weitere, sinnvolle Ausgestaltungen eines derartigen Schnellschlussventils können den Unteransprüchen entnommen werden.

Erfindungsgemäß ist vorgesehen, dass ein Schnellschlussventil ein Ventilgehäuse umfasst, in welchem eine Fluidleitung von einem Fluideinlass bis zu einem Fluidauslass verläuft. Hierbei ist eine Ventilspindel mit einem endständigen Dichtelement vorgesehen, welches in einen in einem Abschnitt der Fluidleitung zwischen dem Fluideinlass und dem Fluidauslass angeordneten Ventilsitz einrücken kann, um diesen im eingerückten Zustand vollständig abzudichten. Die Ventilspindel wird hierbei von einer Schließfeder angetrieben, die jedoch außerhalb des Ventilgehäuses angeordnet ist. Die Schließfeder wird von einem Spannelement gehalten und betätigt, das an einer mit der Schließfeder verbundenen Spannvorrichtung angreift. Das Spannelement weist hierbei ein freies Ende auf, über welches eine manuelle Druckbetätigung zur Vorspannung der Schließfeder ermöglicht wird. Eine mechanische Betätigung durch Aktuatoren ist hierbei ausdrücklich nicht vorgesehen, um sicherzustellen, dass eine Rücksetzung der Spannvorrichtung in den auslösbaren Zustand, in dem sich die Ventilspindel in ihrer Durchlassposition befindet, nur manuell vom Personal durchgeführt werden kann. In diesem Zusammenhang wird das Personal eine Freigabe nur dann erteilen, wenn eine Sicherheitsbeeinträchtigung nicht erkennbar ist. In seiner eingerasteten Position wird das Spannelement mittels einer elektromagnetisch gesteuerten Verrastung gehalten und kann durch eine Auslösung der elektromagnetisch gesteuerten Verrastung freigegeben werden, um das Schnellschlussventil auszulösen. In diesem Fall wird die Schließfeder die Ventilspindel in die Fluidleitung hineinpressen, so dass die Fluidleitung durch die Ventilspindel verschlossen wird.

Eine derartige Lösung erlaubt es, aufgrund der im Wesentlichen außerhalb des Ventilgehäuses vorgesehenen Schließmechanik eine sehr leichte und kompakte Bauweise zu realisieren, die direkt an einem Absperrhahn eines Druckbehälters angeordnet werden kann. Eine Verkantung aufgrund des anhängenden Gewichts an dem Absperrhahn ist hierbei nicht zu erwarten, selbst dann nicht, wenn zusätzlich an der Seite des Fluidauslasses ein Dosierregler ebenfalls angehängt wird. Ein vollständiges Umbauen der Gesamtvorrichtung mit einem Gehäuse entfällt hierdurch, indem die Ventilspindel über eine fluiddichte Buchse in die Fluidleitung einrücken kann. Das Ein- und Ausrücken der Ventilspindel ist im Rahmen des üblichen Verschleißes beliebig reversibel, so dass eine Abnutzung des Ventils durch häufiges Auslösen nicht in besonderem Maße zu erwarten ist.

Erfindungsgemäss weist das Schnellschlussventil als Spannvorrichtung ein Kniegelenk auf. In konkreter Ausgestaltung besteht das Kniegelenk aus zwei Schenkeln, die sich zwischen dem Ventilgehäuse und einem die Schließfeder betätigenden Federteller befinden können. Die beiden Schenkel sind über ein Verbindungselement in der Mitte des Kniegelenks gelenkig verbunden, an dem vorteilhafterweise auch die Spannvorrichtung angreift. Durch Betätigen der Spannvorrichtung wird hierdurch das Kniegelenk durchgedrückt und damit die Schließfeder gegenüber dem Ventilgehäuse gespannt, wobei die mit dem Federteller verbundene Ventilspindel aus dem Ventilgehäuse ausrückt.

Soweit im Weiteren von einem durchgedrückten Kniegelenk gesprochen wird, ist zu beachten, dass ein vollständiges Durchdrücken des Kniegelenks selbstverständlich zu einer Blockierung des Schnellschlussventils führen würde, so dass ein Durchdrücken niemals bis zu einer gleichsinnigen Ausrichtung der beiden Schenkel des Kniegelenks führen darf, sondern vor Erreichen einer solchen gleichsinnigen Ausrichtung innegehalten werden muss.

Die Schließfeder kann ferner an ihrem von dem Federteller wegweisenden Ende eine starre Verbindung mit dem Ventilgehäuse aufweisen, wobei diese Verbindung zumindest mittelbar, also etwa über ein Rahmenelement, welches mit dem Ventilgehäuse verbunden ist, erfolgt. Die Verbindung muss jedoch in einer Art und Weise ausgeführt sein, dass eine Abstützung der Schließfeder gegenüber dem Ventilgehäuse ermöglicht wird.

In konkreter Weiterbildung des Schnellschlussventils kann das Spannelement eine Spannspindel sein, welche Mittel zum Eingriff der elektromagnetischen Verrastung aufweist. Ein solches Eingriffsmittel kann eine beispielsweise um die Spannspindel herumlaufende Sicke sein, in welche die elektromagnetische Verrastung in einer Art und Weise eingreift, dass eine Längsverschiebung der Spannspindel nach dem Eingriff verhindert ist. Wird also durch eine Druckbewegung die Spannspindel auf das Kniegelenk einwirken, so versucht aufgrund der Federkraft der Schließfeder das Kniegelenk sich wieder zu beugen, was zu einem Zurückschieben der Spannspindel in Längsrichtung führen würde. Solange die elektromagnetische Verrastung allerdings in die Sicke eingreift und damit eine Längsverschiebung der Spannspindel verhindert, bleibt das Kniegelenk durchgedrückt und die Schließfeder gespannt.

Eine Alternative hierzu stellt es dar, einen Spannhebel vorzusehen, der direkt oder über ein Betätigungselement an dem Kniegelenk angreift. Hierdurch wird das freie Ende des Spannelements mit einer manuellen Betätigungseinrichtung blockiert werden, um einer maschinellen Betätigung weiter vorzubeugen. Hierbei kann durch ein Betätigen des Spannhebels das eventuell vorhandene Betätigungselement von dem Kniegelenk weg ziehen, wobei das Kniegelenk durchgedrückt wird. Hierbei erfolgt ein Einrasten entweder der auch hier vorhandenen Spannspindel oder aber des Betätigungselements selbst in der elektromagnetischen Verrastung, so dass ein späteres Auslösen auch hier nur durch ein Lösen der elektromagnetischen Verrastung ermöglicht ist.

Als elektromagnetische Verrastung der Spannspindel bzw. des Betätigungselements eignet sich eine Magnetspindel, welche mittels eines Elektromagneten beweglich ist. Die Magnetspindel kann bevorzugtermaßen ihrerseits mithilfe einer Magnetspindelfeder abgefedert sein, so dass eine elektromagnetische Verrastung aufgrund der Kraft des Elektromagneten gegen die Kraft der Magnetspindelfeder erfolgt. Bei einem Auslösen des Elektromagneten und dessen Spannungsabfall im Fall eines auslösenden Signals fällt dessen Kraft weg und die Kraft der Magnetspindelfeder wird die Magnetspindel außer Eingriff der Spannspindel bzw. des Betätigungselements bewegen. Hierdurch wird die Spannspindel bzw. das Betätigungselement freigegeben und das Kniegelenk gebeugt, so dass die Ventilspindel in den von der Fluidleitung gebildeten Ventilsitz einrücken kann.

Im Bereich ihres auf die Spannspindel gerichteten Endes weist die Magnetspindel eine Klinke auf, welche zum Einrücken in die Sicke der Spannspindel hergerichtet ist. Die Spannspindel ihrerseits weist im Bereich vor der Sicke, sich von der Sicke weg verjüngend, einen Konusabschnitt auf, welcher im Fall einer Betätigung der Spannspindel die Klinke zunächst wegdrückt und dann in die Sicke einspringen lässt. Die mit der Magnetspindel verbundene Klinke weist vorzugsweise mit einigem Vorteil in diesem Fall zwei Flanken auf, von denen eine mit dem Konusabschnitt der Spannspindel und eine andere mit einer Innenflanke der Sicke der Spannspindel zusammenwirkt, in einer Art, dass die erste Flanke bei einer Kontaktierung des Konusabschnitts auf diesem flach anliegt und die zweite Flanke sich an eine Innenflanke der Sicke anschmiegt, wenn die Klinke in die Sicke eingreift.

Im Bereich der Fluidleitung kann mit einigem Vorteil eine röhrenförmige Dichtung eingebracht sein, welche den Sitz der Ventilspindel in ihrem eingerückten Zustand abdichtet. Eine solche röhrenförmige Dichtung kann ferner mit ihrem Innendurchmesser dem Außendurchmesser der Ventilspindel entsprechen, wobei in ihrem Einbauzustand die röhrenförmige Dichtung derart gestaucht wird, dass sich ihr Innendurchmesser aufgrund der Stauchung geringfügig reduziert. Hierdurch ist sichergestellt, dass eine vollständige Abdichtung der Fluidleitung durch das Einrücken der Ventilspindel erfolgt.

Hierfür kann die Ventilspindel unterschiedliche geeignete Formen aufweisen. Zunächst kann die Ventilspindel mit dem Dichtelement derart einstückig gebildet sein, dass Ventilspindel und Dichtelement nahtlos ineinander übergehen, dass also letztlich ein Abschnitt der Ventilspindel selbst als Dichtelement dient. In diesem Fall versperrt die Ventilspindel selbst die Fluidleitung. Das Dichtelement kann aber auch sowohl mit der Ventilspindel verbunden als auch von dieser gelöst sein und eine beliebige zur Abdichtung geeignete Form aufweisen. Insbesondere ist daran gedacht, das Dichtelement zylindrisch, kegelförmig, kegelstumpfförmig, kugelförmig oder sphärisch auszubilden.

Die vorstehend beschriebene Erfindung wird im Folgenden anhand eines Ausführungsbeispiels näher erläutert.

Es zeigen
- Figur 1: ein Schnellschlussventil erfindungsgemäßer Bauweise in einer perspektivischen Darstellung von schräg oben,
- Figur 2: das Schnellschlussventil gemäß Figur 1 in einer Draufsicht von der Unterseite her, mit zwei Schnittebenen,
- Figur 3: das Schnellschlussventil gemäß Figur 2 in einer ersten Schnittebene in einer Querschnittsdarstellung,
- Figur 4: das Schnellschlussventil gemäß Figur 2 in einer zweiten Schnittebene in einer Querschnittsdarstellung, sowie
- Figur 5: eine alternative Ausführungsform eines der Schnellschlussventile gemäß Figuren 1 bis 4 in einer perspektivischen Schnittdarstellung.

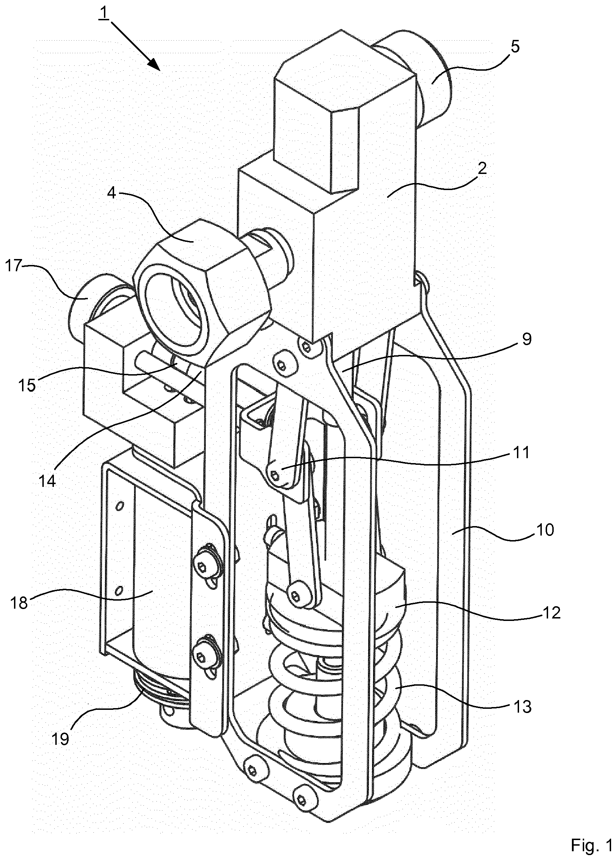

Figur 1 zeigt ein Schnellschlussventil 1, welches im Wesentlichen aus einem Ventilgehäuse 2 und einem Käfig 10 besteht. Das Ventilgehäuse 2 weist einen Fluideinlass 4 und einen Fluidauslass 5 auf, über welche das Fluid, dessen Durchfluss mithilfe des Schnellschlussventils 1 abgesperrt werden soll, im Normalfall bewegt wird. Die Anschlüsse des Fluideinlasses 4 und des Fluidauslasses 5 sind beliebig variabel, so dass verschiedene Anschlusssysteme mit dem vorliegenden Schnellschlussventil 1 bedient werden können. In das Ventilgehäuse 2 rückt im Fall eines Auslösens des Schnellschlussventils 1 eine Ventilspindel 9 ein, welche von einer Schließfeder 13 angetrieben wird. Die Schließfeder 13 ist an ihrer von dem Ventilgehäuse 2 abgewandten Seite mit dem Käfig 10 verbunden, drückt aber einen Federteller 12 in Richtung des Ventilgehäuses 2. Mit dem Federteller 12 verbunden ist die Ventilspindel 9, welche bei einer Entlastung der Schließfeder 13 demzufolge bewegt wird. In einer vorgespannten Position gehalten wird die Schließfeder aufgrund eines Kniegelenks 11, welches von einer Spannspindel 14 fast vollständig durchgedrückt werden kann. Ein vollständiges Durchdrücken des Kniegelenks 11 durch die Spann-spindel 14 ist über einen Anschlag der Spannspindel 14 verhindert, so dass eine Beugung des Kniegelenks 11 aufgrund der Federkraft der Schließfeder 13 stets möglich ist.

Die Spannspindel 14 ist in einer Längsführung gehalten weist ein freies Ende mit einer Druckfläche 17 auf, an welcher kein Aktuator angeschlossen ist. Eine Betätigung der Spannspindel 14 ist daher lediglich durch Druck auf die Druckfläche 17 möglich. In einer Freigabelage rückt die Spannspindel 14 von dem Kniegelenk weg, wofür die Federkraft der Schließfeder 13 verantwortlich ist. Um dies im gespannten Zustand zu verhindern, weist die Spannspindel 14 eine Sicke 15 auf, in welche eine Magnetspindel 21 eingreifen kann. Diese wird über einen Elektromagneten 18 betätigt und im Fall eines Freigebens durch den Elektromagneten 18 mithilfe einer Magnetspindelfeder 19 außer Eingriff der Sicke 15 gebracht. In diesem Fall kann die Spannspindel 14 frei von dem Kniegelenk wegrücken und das Schnellschlussventil 1 dadurch ausgelöst werden. Insoweit ist eine rein elektrische Auslösung durch ein Loslassen des Elektromagneten möglich, der im Betriebsfall von einem Ruhestrom durchflossen wird. Durch ein Wegfallen des Stroms am Elektromagneten 18, sei es durch ein Auslösen oder durch einen Stromausfall, ebenso durch Beschädigungen, Kabelbruch usw., wird ein sicherer Zustand hergestellt, indem das Schnellschlussventil 1 auslöst und den Fluidaustritt aus einem angeschlossenen Fluidbehälter verhindert.

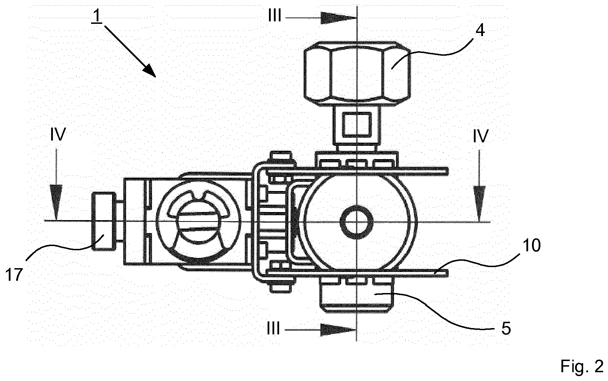

Figur 2 zeigt eine Draufsicht auf das Schnellschlussventil 1 von unten her, also auf die Unterseite des Käfigs und die Befestigung der Schließfeder an dem Käfig. In der Figur 2 sind die Schnittebenen der nachfolgenden Querschnittsdarstellungen eingezeichnet, welche einmal quer durch die Spannspindel und die Druckfläche 17, und das andere Mal quer durch den Fluideinlass 4 und den
Fluidauslass 5 hindurchgelegt sind.

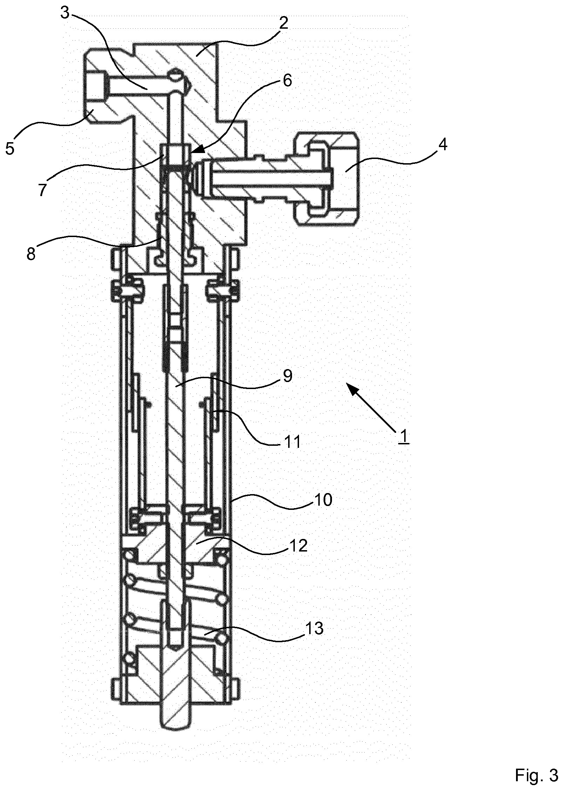

Figur 3 zeigt zunächst den Querschnitt durch den Fluideinlass 4 und den Fluidauslass 5. In dieser Querschnittsdarstellung ist das Ventilgehäuse 2 ebenfalls quer durchschnitten, so dass die Fluidleitung 3 zwischen dem Fluideinlass 4 und dem Fluidauslass 5 erkennbar ist. In einer abgewinkelten Anordnung treffen die verlaufenden Leitungen innerhalb des Ventilgehäuses 2 so aufeinander, dass in einem mittleren Abschnitt der Fluidleitung 3 die Zuführung der Ventilspindel 9 durch eine fluiddichte Buchse 8 hindurch so erfolgen kann, dass die Ventilspindel 9 in diesen mittleren Fluidleitungsabschnitt einrücken kann. Eine röhrenförmige Dichtung 7 ist in diesem Abschnitt der Fluidleitung 3 so vorgesehen, dass diese den Ventilsitz 6 markiert, wobei die röhrenförmige Dichtung 7 einen dem Außendurchmesser der Ventilspindel entsprechenden Innendurchmesser aufweist. Aufgrund einer zusätzlichen Stauchung der röhrenförmigen Dichtung 7 reduziert sich dieser Innendurchmesser nochmals, so dass die Ventilspindel 9 bei einem Einrücken in den Ventilsitz 6 auf jeden Fall vollständig abdichtet.

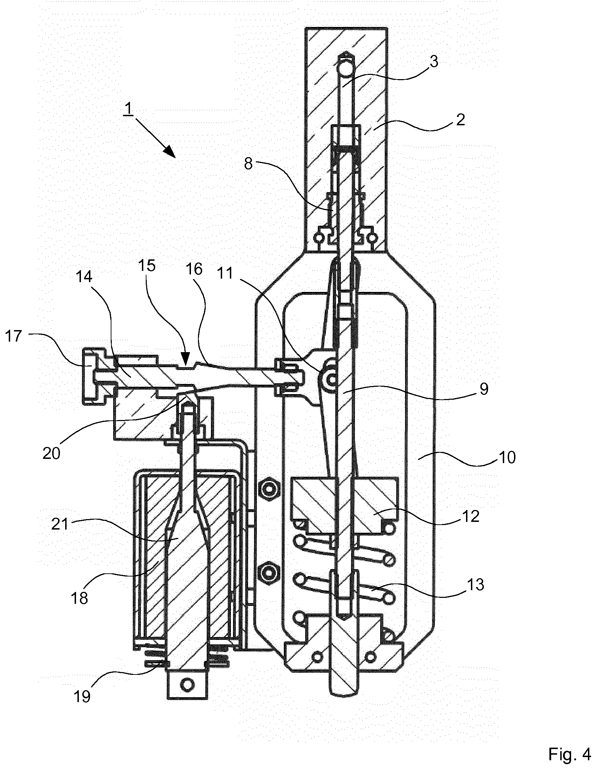

Figur 4 zeigt den Querschnitt durch die Spannspindel 14 und die Druckfläche 17, so dass in diesem Fall der Auslösemechanismus besonders betrachtet werden kann. Ein Elektromagnet 18 betätigt eine Magnetspindel 21, welche aufgrund der Kraft des Elektromagneten 18 in Richtung der Spannspindel 14 gerückt wird. Dieser folgt gegen die Kraft einer Magnetspindelfeder 19, welche bei Nachlassen der Kraft des Elektromagneten 18 die Magnetspindel wieder von der Spannspindel 14 wegbewegt. An der der Spannspindel 14 zugewandten Seite der Magnetspindel 21 ist eine Klinke 20 angeordnet, welche in eine Sicke 15 der Spannspindel 14 eingreifen kann. Die Spannspindel 14 weist in dem Bereich zwischen der Sicke 15 und dem Kniegelenk 11 einen Konusabschnitt 16 auf, durch welchen die Spannspindel 14, ausgehend von einem ausgelösten Zustand, die Magnetspindel 21 bei einem manuellen Druck auf die Druckfläche 17 so beiseite drücken kann, dass nach Überwinden des Konusabschnitts 16 die Klinke 20 in die Sicke 15 einrücken kann. Die Klinke 20 weist hierbei zwei Flanken auf, nämlich zunächst eine an den Konusabschnitt 16 angepasste, hier breiter gezeichnete Flanke, und eine mit der Innenflanke der Sicke 15 korrespondierende zweite Flanke. Die Spannspindel 14 greift an einem Verbindungselement an, welches in der Mitte des Kniegelenks 11 angeordnet ist und dieses nahezu durchdrückt. Hierdurch wird gegen die Kraft der Schließfeder 13 der Federteller 12 von dem Ventilgehäuse 2 weggedrückt und damit die Ventilspindel 9 aus ihrem Ventilsitz in dem Ventilgehäuse 2 ausgerückt. Die Gegenkraft der Schließfeder 13 wird von dem Käfig 10, welcher mit dem Ventilgehäuse 2 verbunden ist, aufgenommen.

Im Fall eines auslösenden Signals oder eines Stromausfalls oder Kabelbruchs wird der Elektromagnet 18 stromlos und die Magnetspindel 21 nicht länger in ihrer Verrastungsposition in Eingriff in die Sicke 15 der Spannspindel 14 halten, so dass aufgrund der Kraft der Magnetspindelfeder 19 die Magnetspindel 21 mit ihrer Klinke 20 aus der Sicke 15 der Spannspindel 14 ausrückt und diese damit freigibt. Die Spannspindel 14 wird hierdurch von dem Kniegelenk 11 in ihrer Längsrichtung wegrücken, wodurch das Kniegelenk 11 gebeugt wird und die Schließfeder 13 sich unter Vortrieb des Federtellers 12 in Richtung des Ventilgehäuses 2 entspannen kann. Die mit dem Federteller 12 verbundene Ventilspindel 9 wird hierdurch in das Ventilgehäuse 2 einrücken und hierdurch den Durchgang durch die Fluidleitung 3 sicher blockieren.

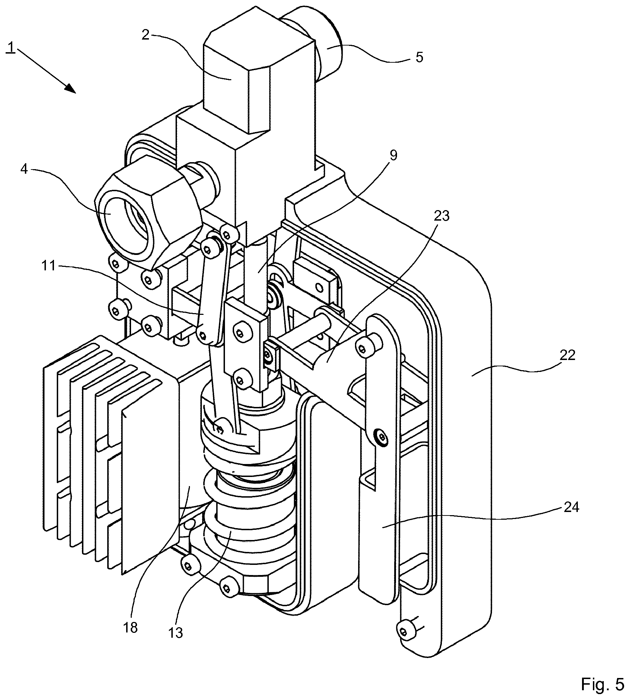

Figur 5 zeigt eine weitere Ausgestaltungsform eines Schnellschlussventils 1, welches ein Griffelement 22 und einen daran angebrachten Spannhebel 24 aufweist. Der Spannhebel 24 greift über ein Betätigungselement 23 an dem Kniegelenk 11 an, so dass bei einem Zusammendrücken von Spannhebel 24 und Griffelement 22 das Kniegelenk 11 in seine durchgedrückte Position gebracht wird. In dieser Position wird die wie in den zuvor gezeigten Zeichnungen angeordnete Spannspindel 14 mit der elektromagnetischen Verrastung in Eingriff geraten und die Ventilspindel 9 in ihrer aus dem Ventilgehäuse 2 ausgerückten Position festhalten. Im Falle eines auslösenden Ereignisses wird auch hier die Spannspindel freigegeben, das Kniegelenk durchgebeugt werden und die Ventilspindel 9 aufgrund der Federkraft der Schließfeder 13 in das Ventilgehäuse 2 einrücken und damit den Fluiddurchgang von Fluideinlass 4 zum Fluidauslass 5 versperren. Über das Betätigungsmittel 23 wird der Spannhebel 24 von dem Griffelelement 22 weggedrückt, gegebenenfalls um eine Schwenkachse herum, wobei von dieser Position aus der Schließvorgang erneut durchlaufen werden kann.

Vorstehend beschrieben ist somit ein Schnellschlussventil, welches eine kompakte Bauweise besitzt, um direkt im Bereich von Fluidbehältern angeordnet zu werden, ohne hierbei größere mechanische Belastungen zu verursachen, welches elektrisch ausgelöst werden kann, jedoch aus Sicherheitsgründen nur mechanisch wieder in seine Durchgangslage versetzt werden kann und gleichzeitig eine sichere Abdichtung einer Fluidleitung ermöglicht.

### BEZUGSZEICHENLISTE

- 1: Schnellschlussventil
- 2: Ventilgehäuse
- 3: Fluidleitung
- 4: Fluideinlass
- 5: Fluidauslass
- 6: Ventilsitz
- 7: Dichtung
- 8: Buchse
- 9: Ventilspindel
- 10: Käfig
- 11: Kniegelenk
- 12: Federteller
- 13: Schließfeder
- 14: Spannspindel
- 15: Sicke
- 16: Konusabschnitt
- 17: Druckfläche
- 18: Elektromagnet
- 19: Magnetspindelfeder
- 20: Klinke
- 21: Magnetspindel
- 22: Griffelement
- 23: Betätigungselement
- 24: Spannhebel

## Patentansprüche

1. Schnellschlussventil zur Verriegelung eines Fluidbehälters, umfassend ein Ventilgehäuse (2) mit einem über eine Fluidleitung (3) mit einem Fluidauslass (5) verbundenen Fluideinlass (4) und einer durch eine fluiddichte Buchse (8) in die Fluidleitung (3) längsverschieblich einrückbare Ventilspindel (9) mit einem endständigen Dichtelement zur Abdichtung der Fluidleitung, wobei die Ventilspindel (9) gegen die Federkraft einer Schließfeder (13) in einer Durchlassposition vorspannbar ist, wobei die Schließfeder (13) von einer mittels eines Spannelements betätigten Spannvorrichtung gehalten ist, welches Spannelement an einem freien Ende eine manuelle Druckbetätigung zur Vorspannung der Schließfeder (13) erlaubt und mittels einer elektromagnetisch gesteuerten Verrastung in einer Vorspannposition gehalten und aus dieser freisetzbar ist,
**dadurch gekennzeichnet, dass** die Spannvorrichtung als Kniegelenk (11) ausgeführt ist, wobei das Spannelement in der Mitte des Kniegelenks (11) angreift.

2. Schnellschlussventil gemäß Anspruch 1, **dadurch gekennzeichnet, dass** das Kniegelenk (11) einerseits gelenkig mit dem Ventilgehäuse (2) und andererseits gelenkig mit einem die Schließfeder (13) betätigenden Federteller (12) verbunden ist.

3. Schnellschlussventil gemäß Anspruch 2, **dadurch gekennzeichnet, dass** die Schließfeder (13) an ihrem von dem Federteller (12) wegweisenden Ende eine starre, zumindest mittelbare, Verbindung mit dem Ventilgehäuse (2) besitzt.

4. Schnellschlussventil gemäß einem der vorhergehenden Ansprüche, **dadurch gekennzeichnet, dass** das Spannelement eine Spannspindel (14) ist, welche eine Sicke (15) für einen Eingriff der elektromagnetischen Verrastung aufweist.

5. Schnellschlussventil gemäß einem der Ansprüche 1 bis 3, **dadurch gekennzeichnet, dass**, das Spannelement ein Spannhebel (24) ist, welcher unmittelbar, oder mittelbar unter Zwischenschaltung wenigstens eines Betätigungselements (23), an dem Kniegelenk (11) angreift, wobei ein an dem Kniegelenk angreifendes, mit dem Betätigungselement (23) baueinheitliches oder von diesem separates Halteelement eine Sicke (15) für einen Eingriff der elektromagnetischen Verrastung aufweist.

6. Schnellschlussventil gemäß einem der Ansprüche 4 oder 5, **dadurch gekennzeichnet, dass** die elektromagnetische Verrastung eine Magnetspindel (21) ist, welche vermittels eines Elektromagneten (18) gegen die Kraft einer Magnetspindelfeder (19) auf die Spannspindel (14) zu beweglich ist.

7. Schnellschlussventil gemäß Anspruch 6, **dadurch gekennzeichnet, dass** der Elektromagnet (18) bei abfallender elektrischer Spannung die Magnetspindel (21) unter Entlastung der Magnetspindelfeder (19) freigibt.

8. Schnellschlussventil gemäß einem der Ansprüche 4 bis 7, **dadurch gekennzeichnet, dass** eine der Spannspindel (14) zugewandte Seite der Magnetspindel (21) eine Klinke (20) zum Einrücken in die Sicke (15) der Spannspindel (14) aufweist.

9. Schnellschlussventil gemäß Anspruch 8, **dadurch gekennzeichnet, dass** die Spannspindel (14) einen Konusabschnitt (16) aufweist, welcher sich von der Sicke (15) weg verjüngt.

10. Schnellschlussventil gemäß Anspruch 9, **dadurch gekennzeichnet, dass** die Klinke (20) zwei Flanken aufweist, von denen eine mit dem Konusabschnitt(16) und eine mit einer Innenflanke der Sicke (15) der Spannspindel (14) zusammenwirkt.

11. Schnellschlussventil gemäß einem der vorhergehenden Ansprüche, **dadurch gekennzeichnet, dass** der Fluidleitung (3) eine röhrenförmige Dichtung (7) zugeordnet ist.

12. Schnellschlussventil gemäß Anspruch 11, **dadurch gekennzeichnet, dass** der Innendurchmesser der röhrenförmigen Dichtung (7) in einem entspannten Zustand dem Außendurchmesser der Ventilspindel (9) entspricht und die röhrenförmige Dichtung (7) in einem Einbauzustand unter Verminderung des Innendurchmessers gestaucht ist.

13. Schnellschlussventil gemäß einem der vorhergehenden Ansprüche, **dadurch gekennzeichnet, dass** das endständige Dichtelement der Ventilspindel mit dieser einstückig gebildet ist.

14. Schnellschlussventil gemäß einem der vorhergehenden Ansprüche, **dadurch gekennzeichnet, dass** das endständige Dichtelement der Ventilspindel kugelförmig, sphärisch, kegelförmig, kegelstumpfförmig oder zylindrisch gebildet ist.

## Claims

1. A quick-closing valve for locking a fluid container, comprising a valve housing (2) having a fluid inlet (4) that is connected to a fluid outlet (5) via a fluid line (3), and a valve stem (9) that is engageable with the fluid line (3) via a fluid-tight bushing (8) and that has an end-position sealing element for sealing off the fluid line, wherein the valve stem (9) is pretensionable in a throughflow position, against the elastic force of a closing spring (13), wherein the closing spring (13) is held by a tensioning device that is actuated by means of a tensioning element, the tensioning element at a free end allowing manual push actuation for pretensioning the closing spring (13), and by means of an electromagnetically controlled lock being held in a pretensioned position and being releasable from same, **characterized in that** the tensioning device is designed as a toggle link (11), wherein the tensioning element acts at the middle of the toggle link (11).

2. The quick-closing valve according to Claim 1, **characterized in that** the toggle link (11) on the one hand is articulatedly connected to the valve housing (2) and on the other hand is articulatedly connected to a spring plate (12) that actuates the closing spring (13).

3. The quick-closing valve according to Claim 2, **characterized in that** the closing spring (13) on its end pointing away from the spring plate (12) has an at least indirect rigid connection with the valve housing (2).

4. The quick-closing valve according to one of the preceding claims, **characterized in that** the tensioning element is a tensioning spindle (14) having an indentation (15) for engagement with the electromagnetic lock.

5. The quick-closing valve according to one of Claims 1 to 3, **characterized in that** the tensioning element is a tensioning lever (24) that directly or indirectly engages with the toggle link (11) with connection of at least one actuating element (23) in between, wherein a retaining element that is structurally integrated with the actuating element (23) or is separate therefrom and that engages with the toggle link has an indentation (15) for engagement of the electromagnetic lock.

6. The quick-closing valve according to one of Claims 4 or 5, **characterized in that** the electromagnetic lock is a magnet spindle (21) that is movable toward the tensioning spindle (14), against the force of a magnet spindle spring (19), by means of an electromagnet (18).

7. The quick-closing valve according to Claim 6, **characterized in that** when the voltage drops, the electromagnet (18) releases the magnet spindle (21), with relaxation of the magnet spindle spring (19).

8. The quick-closing valve according to one of Claims 4 to 7, **characterized in that** a side of the magnet spindle (21) facing the tensioning spindle (14) has a pawl (20) for engagement with the indentation (15) of the tensioning spindle (14).

9. The quick-closing valve according to Claim 8, **characterized in that** the tensioning spindle (14) has a conical section (16) that tapers in a direction away from the indentation (15).

10. The quick-closing valve according to Claim 9, **characterized in that** the pawl (20) has two flanks, one of which cooperates with the conical section (16), and one of which cooperates with an inner flank of the indentation (15) of the tensioning spindle (14).

11. The quick-closing valve according to one of the preceding claims, **characterized in that** a tubular seal (7) is associated with the fluid line (3).

12. The quick-closing valve according to Claim 11, **characterized in that** in a relaxed state the inner diameter of the tubular seal (7) corresponds to the outer diameter of the valve stem (9), and in an installed state the tubular seal (7) is compressed with reduction of the inner diameter.

13. The quick-closing valve according to one of the preceding claims, **characterized in that** the end-position sealing element of the valve stem is formed in one piece with the valve stem.

14. The quick-closing valve according to one of the preceding claims, **characterized in that** the end-position sealing element of the valve stem has a ball-shaped, spherical, conical, truncated conical, or cylindrical shape.

## Revendications

1. Vanne d'arrêt rapide destinée à verrouiller un récipient de fluide, comprenant un corps de vanne (2) avec une entrée de fluide (4) reliée à une sortie de fluide (5) par une conduite de fluide (3) et une tige de vanne (9) pouvant être enfoncée par coulissement longitudinal dans la conduite de fluide (3) à l'aide d'une douille étanche au fluide (8), ladite vanne présentant un élément d'étanchéité terminal destiné à rendre étanche la conduite de fluide, dans laquelle la tige de vanne (9) peut être précontrainte dans une position de passage contre la force de ressort d'un ressort de fermeture (13), dans laquelle le ressort de fermeture (13) est maintenu par un dispositif de serrage actionné au moyen d'un élément de serrage, ledit élément de serrage permettant à une extrémité libre un actionnement par pression manuel afin de précontraindre le ressort de fermeture (13) et pouvant être maintenu dans une position de précontrainte et libéré de celle-ci au moyen d'un dispositif d'enclenchement à commande électromagnétique, **caractérisée en ce que** le dispositif de serrage est réalisé sous forme de genouillère (11), l'élément de serrage attaquant au centre de la genouillère (11).

2. Vanne d'arrêt rapide selon la revendication 1, **caractérisée en ce que** la genouillère (11) est d'une part reliée de manière articulée au corps de vanne (2) et d'autre part reliée de manière articulée à une coupelle de ressort (12) actionnant le ressort de fermeture (13).

3. Vanne d'arrêt rapide selon la revendication 2, **caractérisée en ce que** le ressort de fermeture (13) possède à son extrémité détournée de la coupelle de ressort (12) un raccordement rigide, au moins indirect, au corps de vanne (2).

4. Vanne d'arrêt rapide selon l'une quelconque des revendications précédentes, **caractérisée en ce que** l'élément de serrage est une tige de serrage (14) présentant une moulure (15) pour la mise en prise du dispositif d'enclenchement électromagnétique.

5. Vanne d'arrêt rapide selon l'une quelconque des revendications 1 à 3, **caractérisée en ce que** l'élément de serrage est un levier de serrage (24) attaquant directement ou indirectement au niveau de la genouillère (11) avec au moins un élément d'actionnement (23) interposé, dans laquelle un élément de maintien attaquant à la genouillère, réalisé intégralement avec l'élément d'actionnement (23) ou étant séparé de celui-ci, présente une moulure (15) pour la mise en prise du dispositif d'enclenchement électromagnétique.

6. Vanne d'arrêt rapide selon l'une des revendications 4 ou 5, **caractérisée en ce que** le dispositif d'enclenchement électromagnétique est une tige magnétique (21) pouvant être rapprochée de la tige de serrage (14) au moyen d'un électroaimant (18) contre la force d'un ressort de tige magnétique (19).

7. Vanne d'arrêt rapide selon la revendication 6, **caractérisée en ce que** l'électroaimant (18) libère la tige magnétique (21) en déchargeant le ressort de tige magnétique (19) lorsque la tension électrique diminue.

8. Vanne d'arrêt rapide selon l'une des revendications 4 bis 7, **caractérisée en ce qu'**un côté de la tige magnétique (21), tourné vers la tige de serrage (14), présente un cliquet (20) pour l'enclenchement de la moulure (15) de la tige de serrage (14).

9. Vanne d'arrêt rapide selon la revendication 8, **caractérisée en ce que** la tige de serrage (14) présente une partie conique (16) s'effilant en partant de la moulure (15).

10. Vanne d'arrêt rapide selon la revendication 9, **caractérisée en ce que** le cliquet (20) présente deux flancs dont l'un coopère avec la partie conique (16) et l'autre coopère avec un flanc intérieur de la moulure (15) de la tige de serrage (14).

11. Vanne d'arrêt rapide selon l'une quelconque des revendications précédentes, **caractérisée en ce qu'**une garniture tubulaire (7) est attribuée à la conduite de fluide (4) .

12. Vanne d'arrêt rapide selon la revendication 11, **caractérisée en ce que** le diamètre intérieur de la garniture tubulaire (7) dans un état détendu correspond au diamètre extérieur de la tige de vanne (9) et **en ce que** la garniture tubulaire (7) dans un état installé est refoulée avec une diminution du diamètre intérieur.

13. Vanne d'arrêt rapide selon l'une quelconque des revendications précédentes, **caractérisée en ce que** l'élément d'étanchéité terminal de la tige de vanne est réalisé d'une seule pièce avec celle-ci.

14. Vanne d'arrêt rapide selon l'une quelconque des revendications précédentes, **caractérisée en ce que** l'élément d'étanchéité terminal de la tige de vanne est formé en forme de bille, de sphère, de cône, de cône tronqué ou de cylindre.
